# EUROPÄISCHE PATENTANMELDUNG

(11) **EP 2 140 925 A1**
(43) Veröffentlichungstag der Anmeldung: **06.01.2010**
(21) Anmeldenummer: 09006027.8
(22) Anmeldetag: 30.04.2009
(51) Int. Cl.: B01D 53/14

(54) **Verfahren zur Abtrennung von Schwefel aus einem Schwefel enthaltenden Gas**

(30) Priorität: 03.07.2008 DE 102008031509
(71) Anmelder: Linde AG, 80331 München (DE)
(72) Erfinder: Adler, Robert, A-2201 Gerasdorf (AT); Mayer, Markus, A-2331 Vösendorf (AT); Klein, Ekkehardt, A-3425 Langenlebarn (AT)
(74) Vertreter: Zahn, Christoph

(57) **Zusammenfassung**

Es wird ein Verfahren zur Abtrennung von Schwefel aus einem Schwefel-enthaltenden Gas, insbesondere aus Wasserstoff oder Erdgas, wobei das Gas verdichtet und der Schwefel mittels eines absorptiven Abtrennprozesses entfernt wird, beschrieben.

Erfindungsgemäß wird das Schwefel-enthaltende Gas (1) vor der Zuführung in den absorptiven Abtrennprozess (A) verdichtet oder zumindest vorverdichtet (V1).

## Beschreibung

Die Erfindung betrifft ein Verfahren zur Abtrennung von Schwefel aus einem Schwefel-enthaltenden Gas, insbesondere aus Wasserstoff oder Erdgas, wobei das Gas verdichtet und der Schwefel mittels eines absorptiven Abtrennprozesses entfernt wird.

Gattungsgemäße Verfahren zur Abtrennung von Schwefel aus einem Schwefel-enthaltenden Gas kommen beispielsweise bei Erdgas-Tankstellen zur Anwendung. Das als Kraftstoff verwendete Erdgas wird bei Erdgas-Tankstellen aus dem bestehen Erdgasnetz entnommen, getrocknet und auf einen Speicherdruck von bis zu 300 bar verdichtet. Der Schwefelgehalt des aus dem Erdgasnetz entnommenen Erdgases ist üblicherweise für die gegenwärtige Motoren- sowie Abgasnachreinigungstechnologie zu hoch. Insbesondere die für die Abgasnachreinigung erforderlichen Katalysatoren werden aufgrund des derzeit im Erdgas vorhandenen Schwefelgehalts geschädigt, was zur Folge hat, dass sie die geforderten Lebensdauern nicht erreichen können.

Aufgrund der gesetzlich vorgeschriebenen Odorierung des als Kraftstoff verwendeten Erdgases - hierzu werden dem Erdgas THT (Tetrahydrothiophen) und/oder Schwefelmerkaptane zugesetzt -, darf der Schwefelanteil im Erdgas einen vorgegebenen Wert nicht unterschreiten.

Bei der großindustriellen Aufbereitung von Erdgas kommen selektive Schwefelabsorptionsprozesse bereits seit längerem zur Anwendung. Die für die Entfernung von Schwefel geeigneten Absorbermaterialien benötigen üblicherweise eine Betriebstemperatur von 40 bis 80 °C. Diese Temperaturen werden bisher mittels explosionsgeschützter, elektrischer Heizungen, die den Absorbern zugeordnet sind, erzeugt.

Aufgabe der vorliegenden Erfindung ist es, ein gattungsgemäßes Verfahren zur Abtrennung von Schwefel aus einem Schwefel-enthaltenden Gas, insbesondere aus Wasserstoff oder Erdgas, anzugeben, das die vorgenannten Probleme vermeidet und insbesondere den Einsatz einer zusätzlichen Heizvorrichtung für den absorptiven Abtrennprozess überflüssig macht.

Zur Lösung dieser Aufgabe wird ein gattungsgemäßes Verfahren zur Abtrennung von Schwefel aus einem Schwefel-enthaltenden Gas vorgeschlagen, das dadurch gekennzeichnet ist, dass das Schwefel-enthaltende Gas vor der Zuführung in den absorptiven Abtrennprozess verdichtet oder zumindest vorverdichtet wird.

Hierbei wird das Schwefel-enthaltende Gas vor der Zuführung in den absorptiven Abtrennprozess vorzugsweise zumindest so hoch verdichtet, dass die dabei entstehende Verdichtungswärme die Temperierung des oder der in dem absorptiven Abtrennprozess verwendeten Absorbermaterialien ermöglicht. Die Verwendung zusätzlicher Heizvorrichtungen für den absorptiven Abtrennprozess erübrigt sich dadurch.

Weitere vorteilhafte Ausgestaltungen des erfindungsgemäßen Verfahrens zur Abtrennung von Schwefel aus einem Schwefel-enthaltenden Gas, die Gegenstände der abhängigen Patentansprüche darstellen, sind **dadurch gekennzeichnet, dass**
- das dem absorptiven Abtrennprozess zugeführte, Schwefel-enthaltende Gas eine Temperatur zwischen 20 und 200 °C, vorzugsweise zwischen 40 und 100°C, aufweist,
- das aus dem absorptiven Abtrennprozess abgeführte Gas nachverdichtet wird,
- zumindest ein Teilstrom des Schwefel-enthaltenden Gases an dem absorptiven Abtrennprozess vorbeigeführt wird, wobei diese Teilstrommenge vorzugsweise variierbar ist,
- das dem absorptiven Abtrennprozess zugeführte, Schwefel-enthaltende Gas nach seiner (Vor-)Verdichtung abgekühlt wird,
- der absorptive Abtrennprozess derart ausgebildet ist, dass neben Schwefel wenigstens eine weitere Komponente aus dem Schwefel-enthaltenden Gas zumindest teilweise abgetrennt wird, und
- das von Schwefel gereinigte Gas einem Fahrzeug als Betriebsmittel und/oder Brennstoff zugeführt wird.

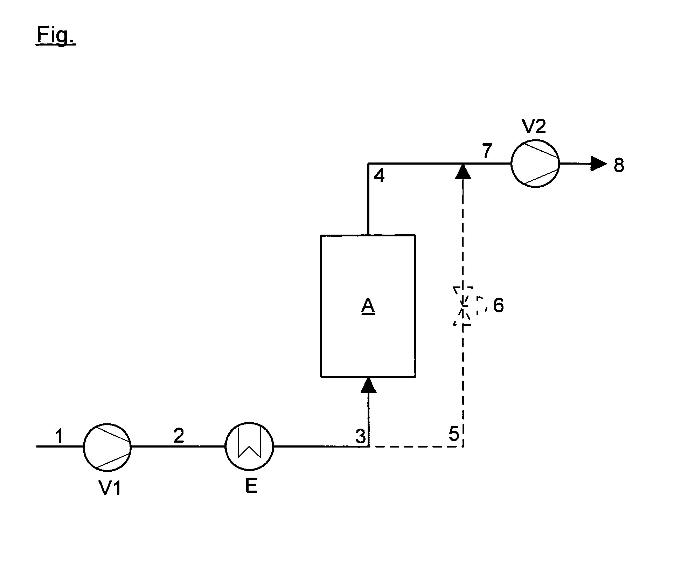

Das erfindungsgemäße Verfahren zur Abtrennung von Schwefel aus einem Schwefel-enthaltenden Gas sowie weitere Ausgestaltungen desselben seien nachfolgend anhand des in der Figur dargestellten Ausführungsbeispieles näher erläutert. Das in der Figur dargestellte Ausführungsbeispiel kommt insbesondere in Erdgas-Tankstellen, die der Betankung von Fahrzeugen jeglicher Art mit komprimiertem Erdgas dienen, zur Anwendung.

Die Figur zeigt einen selektiv Schwefel entfernenden Absorptionsprozess A. Diesem wird über die Leitungsabschnitte 1, 2 und 3 ein Schwefel-enthaltendes Gas zugeführt. Im Falle einer Erdgas-Tankstelle ist dies das aus dem öffentlichen Erdgasnetz entnommene Erdgas. Mittels eines ein- oder mehrstufigen Verdichters bzw. einer ein-oder mehrstufigen Verdichtereinheit V1 wird das Schwefel-enthaltende Gas auf einen Druck verdichtet, der es ermöglicht, dass die dabei entstehende Verdichtungswärme das oder die in dem absorptiven Abtrennprozess A verwendeten Absorbermaterialien temperiert. Es bedarf damit keiner zusätzlichen Heizvorrichtung für die Temperierung des oder der Absorbermaterialien.

Im Falle einer Erdgas-Tankstelle erfolgt im Verdichter bzw. in der Verdichtereinheit V1 eine Verdichtung des Schwefel-enthaltenden Erdgases auf einen Druck zwischen 10 und 30 bar, vorzugsweise zwischen 15 und 25 bar.

Der optional vorzusehende Wärmetauscher E dient dazu, dass im Verdichter bzw. in der Verdichtereinheit V1 komprimierte und dadurch erwärmte Erdgas auf eine Temperatur abzukühlen, die eine optimale Selektivität des oder der in dem nachgeschalteten absorptiven Abtrennprozess A verwendeten Absorbermaterialien zu gewährleisten.

Der absorptive Abtrennprozess A besteht in der Praxis aus einer Absorptionskolonne, die ein Fassungsvermögen von vorzugsweise 50 I aufweist. Neben dem Absorptionsmaterial, das der selektiven Entfernung von Schwefel aus dem Schwefel-enthaltenden Gas dient, ist vorzugsweise noch ein Trocknungsmaterial innerhalb der Absorptionskolonne A vorgesehen. Grundsätzlich kann die Positionierung dieses Trocknungsmaterials vor und/oder nach dem für die Schwefel-Entfernung erforderlichen Absorptionsmaterial erfolgen.

Über die gestrichelt gezeichnete Bypass-Leitung 5, in der vorzugsweise ein Regelventil 6 angeordnet ist, kann ein Teilstrom des Schwefel-enthaltenden (Erd)Gases an dem absorptiven Abtrennprozess A vorbeigeführt werden. Dadurch ist eine Variierung der durch den absorptiven Abtrennprozess A geführten Gasmenge möglich. Der Grad der Schwefelreduktion in dem Schwefel-enthaltenden Gas kann somit beliebig reguliert bzw. variiert werden.

Sofern gewünscht und/oder erforderlich, kann der absorptive Abtrennprozess A dahingehend modifiziert werden, dass zusätzlich zu Schwefel weitere, vorzugsweise unerwünschte Komponenten aus dem Schwefel-enthaltenden Gas entfernt werden.

Das auf die gewünschte Schwefel-Untergrenze abgereinigte Gas wird anschließend über die Leitungsabschnitte 4 und 7 einem zweiten ein- oder mehrstufigen Verdichter bzw. einer zweiten ein- oder mehrstufigen Verdichtungseinheit V2 zugeführt und in diesem bzw. dieser optional auf den gewünschten Enddruck verdichtet. Über Leitung 8 wird das verdichtete Gas anschließend seiner weiteren Verwendung, beispielsweise einer Zwischenspeicherung, zugeführt.

Es sei betont, dass das erfindungsgemäße Verfahren zur Abtrennung von Schwefel aus einem Schwefel-enthaltenden Gas bei unterschiedlichsten Gasen bzw. Gasgemischen, bei denen eine zumindest teilweise, absorptive Entfernung von Schwefel realisiert werden soll, zur Anwendung kommen kann.

## Patentansprüche

1. Verfahren zur Abtrennung von Schwefel aus einem Schwefel-enthaltenden Gas, insbesondere aus Wasserstoff oder Erdgas, wobei das Gas verdichtet und der Schwefel mittels eines absorptiven Abtrennprozesses entfernt wird, **dadurch gekennzeichnet, dass** das Schwefel-enthaltende Gas (1) vor der Zuführung in den absorptiven Abtrennprozess (A) verdichtet oder zumindest vorverdichtet wird (V1).

2. Verfahren nach Anspruch 1, **dadurch gekennzeichnet, dass** das Schwefel-enthaltende Gas (1) vor der Zuführung in den absorptiven Abtrennprozess (A) zumindest so hoch verdichtet wird, dass die dabei entstehende Verdichtungswärme die Temperierung des oder der in dem absorptiven Abtrennprozess (A) verwendeten Absorbermaterialien ermöglicht.

3. Verfahren nach Anspruch 1 oder 2, **dadurch gekennzeichnet, dass** das dem absorptiven Abtrennprozess (A) zugeführte, Schwefel-enthaltende Gas (3) eine Temperatur zwischen 20 und 200 °C, vorzugsweise zwischen 40 und 100 °C, aufweist.

4. Verfahren nach einem der vorhergehenden Ansprüche 1 bis 3, **dadurch gekennzeichnet, dass** das aus dem absorptiven Abtrennprozess (A) abgeführte Gas (4) nachverdichtet wird (V2).

5. Verfahren nach einem der vorhergehenden Ansprüche 1 bis 4, **dadurch gekennzeichnet, dass** zumindest ein Teilstrom (5) des Schwefel-enthaltenden Gases (1) an dem absorptiven Abtrennprozess (A) vorbeigeführt wird, wobei diese Teilstrommenge vorzugsweise variierbar ist (6).

6. Verfahren nach einem der vorhergehenden Ansprüche 1 bis 5, **dadurch gekennzeichnet, dass** das dem absorptiven Abtrennprozess (A) zugeführte, Schwefel-enthaltende Gas (3) nach seiner (Vor-)Verdichtung abgekühlt wird (E).

7. Verfahren nach einem der vorhergehenden Ansprüche 1 bis 6, **dadurch gekennzeichnet, dass** der absorptive Abtrennprozess (A) derart ausgebildet ist, dass neben Schwefel wenigstens eine weitere Komponente aus dem Schwefel-enthaltenden Gas zumindest teilweise abgetrennt wird.

8. Verfahren nach einem der vorhergehenden Ansprüche 1 bis 7, **dadurch gekennzeichnet, dass** das von Schwefel gereinigte Gas (4, 7, 8) einem Fahrzeug als Betriebsmittel und/oder Brennstoff zugeführt wird.
